# FASCICULE DE BREVET EUROPEEN

(11) **EP 1 274 617 B1**
(45) Date de publication et mention de la délivrance du brevet: **19.12.2007**
(21) Numéro de dépôt: 01943362.2
(22) Date de dépôt: 19.04.2001
(51) Int. Cl.: B60T 13/575

(54) **SERVOMOTEUR POUR FREINAGE D'URGENCE**
SERVOMOTOR FÜR EINE NOTBREMSHILFE
SERVOMOTOR FOR EMERGENCY BRAKING

(30) Priorité: 21.04.2000 FR 0005669
(43) Date de publication de la demande: 15.01.2003
(73) Titulaire: BOSCH SISTEMAS DE FRENADO, S.L., 08080 Barcelona 6 (ES)
(72) Inventeur: SIMON BACARDIT, Juan, E-08013 Barcelone (ES)
(74) Mandataire: Hurwic, Aleksander Wiktor
(86) Numéro de dépôt international: PCT/EP2001/005489
(87) Numéro de publication internationale: WO 2001/081142

(56) Documents cités:
- DE-A- 19 755 442
- DE-A- 19 831 962
- DE-A- 19 902 710

## Description

L'invention concerne un servomoteur pneumatique d'assistance au freinage pour un véhicule automobile.

L'invention concerne plus particulièrement un servomoteur pneumatique d'assistance au freinage pour un véhicule automobile, du type qui comporte une enveloppe rigide à l'intérieur de laquelle est mobile une cloison transversale délimitant de façon étanche une chambre avant, soumise à une première pression de dépression moteur, et une chambre arrière soumise à une deuxième pression variant entre la dépression moteur et la pression atmosphérique, du type qui comporte un piston mobile solidaire de la cloison mobile se déplaçant avec la cloison mobile et une tige de commande se déplaçant dans le piston sélectivement en fonction d'un effort axial d'entrée exercé vers l'avant à l'encontre d'un effort de rappel exercé sur la tige par un ressort de rappel, du type dans lequel la tige est mobile suivant une position d'actionnement intermédiaire ou une position d'actionnement extrême obtenue lorsque l'effort d'entrée est appliqué à une vitesse élevée déterminée, du type qui comporte un plongeur qui est agencé à l'avant de la tige de commande dans le piston et un clapet à trois voies qui comporte au moins un siège annulaire arrière du plongeur et qui est susceptible de faire varier la deuxième pression régnant dans la chambre arrière, notamment en mettant en communication la chambre avant et la chambre arrière lorsque la tige de commande est en position de repos, ou en mettant progressivement la chambre arrière en communication avec la pression atmosphérique lorsque la tige de commande est actionnée, du type dans lequel, dans la position extrême d'actionnement de la tige de commande, un palpeur monté coulissant à l'extrémité avant du plongeur est sollicité par le plongeur au contact d'un disque de réaction solidaire du piston mobile pour transmettre au plongeur et à la tige de commande l'effort de réaction du piston mobile, et du type qui comporte un dispositif d'embrayage unidirectionnel qui comporte une douille coaxiale qui coulisse sur le plongeur, et une clé sensiblement annulaire qui entoure avec jeu la douille et qui est susceptible, lorsque l'effort d'entrée est appliqué à la vitesse déterminée, d'être entraînée par le piston mobile pour basculer autour d'un axe globalement transversal pour coopérer avec la périphérie de la douille et pour la bloquer dans une position axiale avant extrême dans laquelle une portée annulaire d'extrémité avant de la douille bloque le palpeur indépendamment du plongeur et de la tige de commande.

De manière connue, une telle conception présente des avantages considérables en terme de sécurité lors d'une situation de freinage d'urgence.

En effet, un servomoteur conventionnel ne comporte ni palpeur, ni dispositif d'embrayage unidirectionnel du palpeur. Le plongeur est susceptible de venir solliciter directement le disque de réaction solidaire de la face arrière du piston mobile.

Dans une situation de freinage extrême pour laquelle un effort de freinage maximal est exercé sur la tige de commande, l'actionnement de la tige du commande provoque l'actionnement du plongeur formant aussi palpeur, ce qui provoque l'ouverture maximale du clapet à trois voies de manière que la chambre arrière soit mise à la pression atmosphérique. Il s'ensuit un déplacement vers l'avant de la cloison mobile et l'extrémité du plongeur vient au contact du disque de réaction solidaire de la face arrière du piston mobile.

Ainsi, l'effort exercé sur le piston mobile lorsque la tige de commande est en fin de course résulte de l'effort d'assistance qui est provoqué par la différence de pression de chaque côté de la paroi mobile et de l'effort exercé par le plongeur formant palpeur sur ledit piston mobile Le conducteur du véhicule ressent par ailleurs l'effort de réaction du freinage, qui est transmis du piston mobile au plongeur par l'intermédiaire du disque de réaction.

Or, on a constaté que bon nombre de conducteurs, confrontés à une situation de freinage d'urgence, sous-estimaient les risques encourus, et que, après avoir freiné brutalement, ils relâchaient leur effort de freinage alors que le maintien d'un effort de freinage était indispensable pour éviter un accident.

En effet, dans le cas d'une situation de freinage extrême accompagnée d'un déplacement rapide de la tige de commande, le plongeur peut venir au contact du disque de réaction et transmettre au conducteur une sensation de freinage maximal avant même que la différence de pression ne soit maximale entre les chambres de pression avant et arrière, ce qui peut conduire le conducteur à relâcher son effort, quand bien même il devrait être maintenu pour bénéficier de l'effort de freinage maximal.

Un servomoteur tel que celui du type décrit précédemment permet de remédier à cet inconvénient en bloquant le plongeur au contact du disque de réaction à l'aide la douille et donc de maintenir un effort maximal sur la face arrière du piston mobile quand bien même le conducteur aurait partiellement relâché son effort.

Toutefois, le servomoteur du type décrit précédemment présente l'inconvénient de ne garantir l'immobilisation axiale de la douille que de façon relativement imprécise.

En effet, la clé bloquant la douille par simple coincement, c'est à dire par l'intermédiaire d'un contact linéique, voire quasi-ponctuel, entre un bord d'une lumière circulaire de la clé et la périphérie de la douille, la douille est susceptible de glisser au contact de la clé. Le document DE 19902710 decrit un système de freinage d'urgence conventionel.

Pour remédier à cet inconvénient, l'invention propose des moyens fiables d'immobilisation de la douille.

Dans ce but, l'invention propose un servomoteur du type décrit précédemment, caractérisé en ce que l'embrayage unidirectionnel comporte au moins un face transversale de blocage de la douille, qui est tournée axialement vers l'arrière pour former une butée pour un ergot de la clé s'étendant radialement vers la douille, de manière à indexer axialement la position de blocage extrême de la douille.

Selon d'autres caractéristiques de l'invention :
- la périphérie de la douille est cylindrique, d'un diamètre sensiblement constant, et comporte une gorge radiale dont une face transversale avant d'épaulement forme la face transversale de blocage,
- la gorge est d'un profil sensiblement tronconique en arrière de la face transversale avant d'épaulement,
- l'ergot présente la forme d'un secteur angulaire tronconique concave qui est complémentaire du profil tronconique de la gorge de la douille,
- la clé présente, en section par un plan axial, la forme d'un "T" dont la branche verticale d'orientation sensiblement radiale est traversée par la douille et dont la branche horizontale, d'orientation sensiblement axiale est reçue sans jeu axial entre deux parois opposées d'un évidement qui traverse le piston perpendiculairement par rapport à son axe pour ne permettre qu'un basculement de la clé dans l'évidement,
- la demi-branche horizontale avant de la clé en T comporte une face tournée radialement vers la douille à partir de laquelle l'ergot fait saillie,
- l'extrémité avant de la demi-branche avant de la clé en T est conformée en arc de cylindre convexe orienté selon un axe orthogonal à l'axe du piston pour coopérer en appui avec une paroi transversale avant de l'évidement,
- l'extrémité arrière de la demi-branche arrière de la clé en T est conformée en arc de cylindre convexe orienté selon un axe orthogonal à l'axe du piston pour coopérer avec une paroi transversale arrière de l'évidement,
- la clé en T est rappelée élastiquement à l'encontre de la paroi transversale de l'évidement par un ressort de compression agencé entre la paroi transversale avant de l'évidement et un pion de centrage de la clé en T qui fait saillie à partir d'une partie de la branche verticale du T qui est opposée radialement à l'ergot.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale de détail d'un servomoteur pneumatique d'assistance au freinage réalisé conformément à un état antérieur de la technique,
- la figure 2 est une vue de détail éclatée en perspective de trois-quart avant du plongeur, de la douille, de la clé et.du plongeur du servomoteur de la figure 1,
- la figure 3 est une vue en coupe axiale d'un servomoteur pneumatique d'assistance au freinage réalisé conformément à l'invention,
- la figure 4 est une vue de détail éclatée en perspective de trois quart avant du plongeur, de la douille, de la clé et du plongeur du servomoteur de la figure 3,
- la figure 5 est une vue de détail éclatée en perspective de trois quart arrière de la clé et de la douille de la figure 4,
- la figure 6 est une vue de détail en coupe axiale du servomoteur de la figure 4, la clé et la douille étant représentés en position de repos,
- la figure 7 est une vue de détail en coupe axiale du servomoteur de la figure 4, la clé étant représentée en position de blocage de la douille.

Dans la description qui va suivre, des chiffres de référence identiques désignent des pièces identiques ou ayant des fonctions similaires.

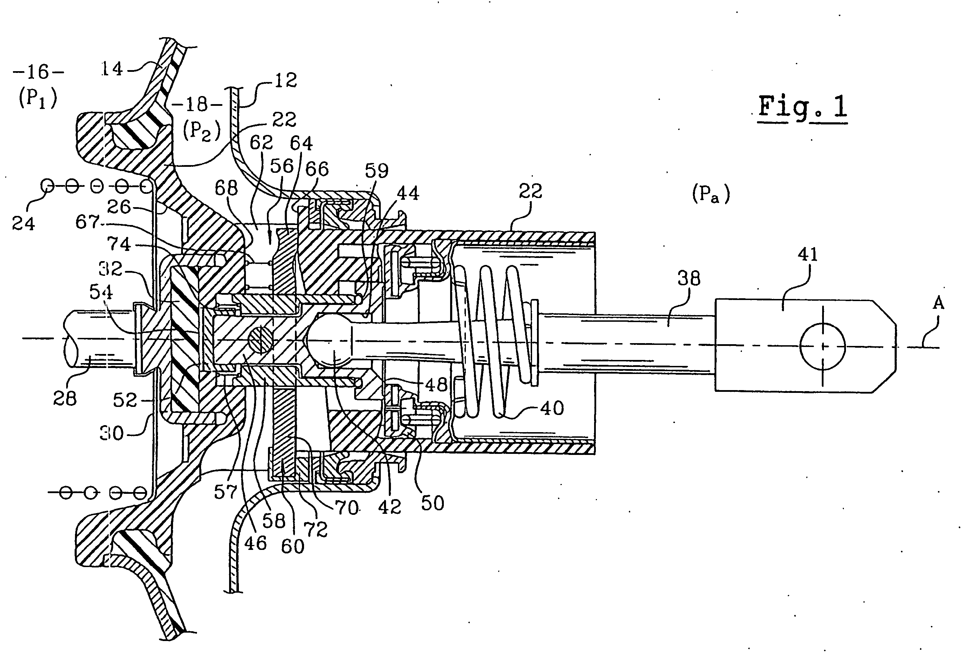

Par convention, les termes "avant", "arrière", supérieur", "inférieur" désignent respectivement des éléments ou des positions orientés respectivement vers la gauche, la droite, le haut, ou le bas des figures 1 à 4.

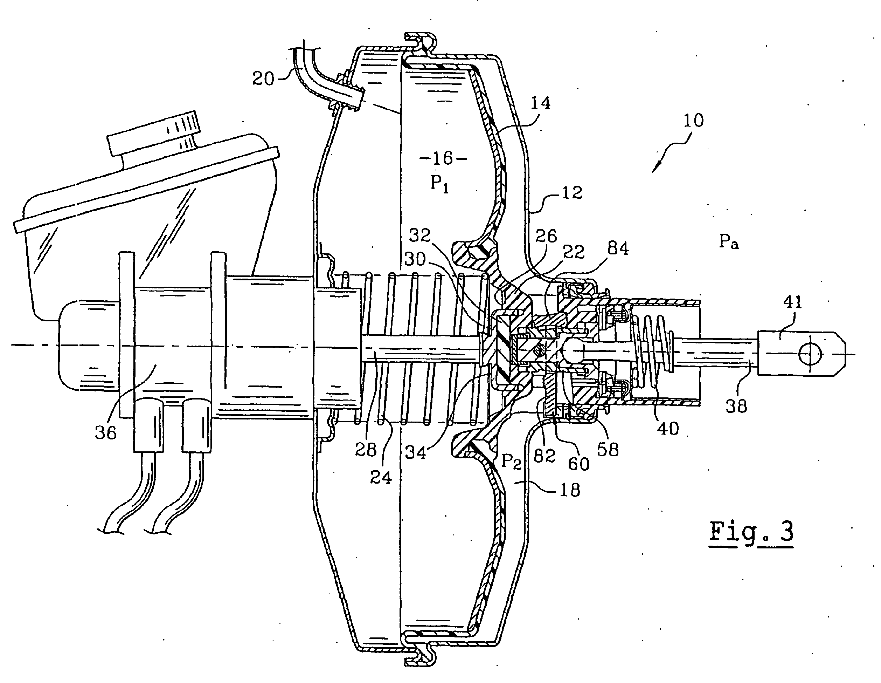

On a représenté à la figure 3 l'ensemble d'un servomoteur 10 pneumatique d'assistance au freinage pour un véhicule automobile.

De manière connue, le servomoteur pneumatique 10 comporte une enveloppe rigide 12 à l'intérieur de laquelle est montée mobile une cloison 14 transversale qui délimite de façon étanche une chambre avant 16, soumise à une première pression "P₁" dont la valeur est égale à la valeur de la dépression du moteur du véhicule, et une chambre arrière 18 soumise à une deuxième pression "P₂". La deuxième pression "P₂" est susceptible, comme il sera décrit ultérieurement, de varier entre la valeur de dépression moteur "P₁" et la valeur de la pression atmosphérique "Pₐ".

La chambre avant 16 est alimentée en pression "P₁" par l'intermédiaire d'un conduit 20 de dépression qui est relié à une source de dépression du véhicule, par exemple une dépression régnant dans un collecteur d'admission (non représenté) d'un moteur du véhicule.

Le servomoteur pneumatique 10 comporte un piston mobile 22 qui est solidaire de la cloison mobile 14. A l'intérieur de l'enveloppe 12, la cloison mobile 14 est rappelée élastiquement vers l'arrière par un ressort 24 de rappel qui prend appui sur l'enveloppe 12 et sur une face avant 26 du piston mobile 22. La face avant 26 du piston mobile 22 porte une coupelle 30 de réaction à l'intérieur de laquelle est agencé, comme on le verra plus loin, un disque de réaction 32 en matériau élastomère. Une face avant 34 de la coupelle 30 de réaction est solidaire d'une tige d'actionnement 28, qui est par conséquent est solidaire des déplacements du piston mobile 22, et qui permet l'actionnement d'un maître-cylindre 36 hydraulique de freinage du véhicule.

Une tige 38 de commande, qui est par exemple reliée à une pédale de frein du véhicule par l'intermédiaire d'un manchon 41 d'accouplement qui est agencé à son extrémité libre arrière, est susceptible de se déplacer dans le piston mobile 22, sélectivement en fonction d'un effort axial d'entrée exercé vers l'avant sur la tige 38 de commande. L'effort d'actionnement est exercé à l'encontre d'un effort de rappel qui est exercé sur la tige 38 par un ressort de rappel 40 qui est interposé entre le piston mobile 22 et la tige 38 de commande.

Comme l'illustre plus précisément la figure 1, l'autre extrémité avant de la tige 38 de commande est conformée en rotule 42 et est reçue dans un logement complémentaire 44 d'un plongeur 46 sensiblement cylindrique qui est monté coulissant dans le piston mobile 22.

Un siège annulaire arrière 48 du plongeur 46 fait partie d'un clapet 50 à trois voies qui est susceptible de faire varier la deuxième pression "P₂"'régnant dans la chambre arrière 18, notamment en mettant en communication la chambre avant 16 et la chambre arrière 18 lorsque la tige 38 de commande est en position de repos, ou en mettant progressivement la chambre arrière 18 en communication avec la pression atmosphérique "Pₐ" lorsque la tige 38 de commande est actionnée.

Le fonctionnement du clapet à trois voies 50 étant connu de l'état de la technique, il ne sera pas décrit plus explicitement dans la présente description.

De manière connue, un palpeur 52 est monté coulissant à la fois sur l'extrémité avant du plongeur 46 qui est opposée au logement 44, et à l'intérieur d'un alésage 54 du piston mobile 22 qui débouche en regard de la coupelle de réaction 30. De la sorte, le palpeur 52 est susceptible d'être sollicité par le plongeur 46 pour solliciter à son tour le disque 32 de réaction et le comprimer, ce qui permet ainsi de transmettre au plongeur 46 et, ce faisant, à la tige de commande 48, l'effort de réaction du piston mobile 26 dans une position d'actionnement extrême de fin de course de la tige de commande 38.

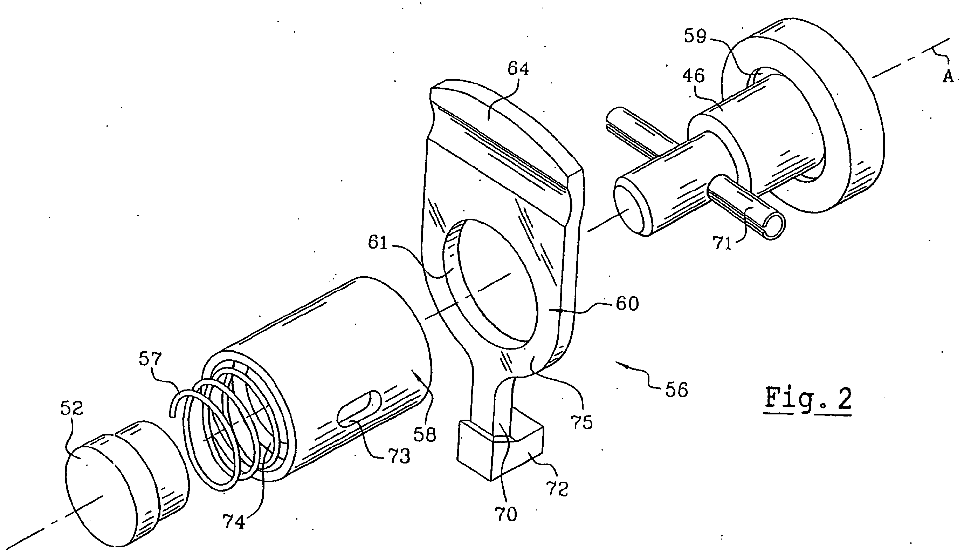

De manière connue, comme l'illustrent les figures 1 et 2, le servomoteur 10 comporte un dispositif 56 d'embrayage unidirectionnel qui comporte d'une part une douille 58 coaxiale qui coulisse sur le plongeur 46 et qui est rappelée élastiquement par l'intermédiaire d'un ressort 57, interposé entre le piston 22 et la douille 58, au contact avec une face d'épaulement 59 du plongeur 46, et qui comporte d'autre part une clé 60 sensiblement annulaire qui entoure avec jeu radial la douille 58. En particulier, lorsque le servomoteur 10 est assemblé, la douille 58 traverse une lumière circulaire 61 de la clé 60.

La clé 60 est disposée dans un évidement 62 qui traverse le piston 22 perpendiculairement à son axe "A". Une partie supérieure 64 de la clé 60 est rappelée élastiquement à l'encontre d'une paroi arrière 66 de l'évidement 62 par l'intermédiaire d'un ressort 67 de rappel qui est interposé entre une paroi avant 68 de l'évidement 62 et la partie supérieure 64 de la clé 60.

Une partie inférieure 70 de la clé 60 est, en position de repos 22, en appui sur un support 72 qui est lié à l'enveloppe 12 du servomoteur 10. Une goupille transversale 71, qui traverse une lumière 73 de la douille 58 et le plongeur 46, est, en position de repos de la tige 38, en appui sur une face avant 75 de la clé 60 pour définir la position de repos du plongeur 46.

De la sorte, lorsqu'un effort d'entrée est appliqué d'arrière en avant suivant une course extrême de la tige de commande 38, et notamment à une vitesse déterminée de celle-ci, la partie supérieure 64 de la clé 60 est entraînée par le piston 22 de commande tandis que sa partie inférieure 70 quitte son appui sur le support 72. De ce fait, la clé 30 bascule autour d'un axe globalement transversal et dans le sens anti-horaire pour coopérer avec la périphérie de la douille 58.

Tant que le mouvement de la tige de commande 38 se poursuit d'arrière en avant et que celle-ci entraîne avec elle la douille 58 par l'intermédiaire de sa face d'épaulement 59, l'effort appliqué sur la tige de commande 38 suffit à empêcher le blocage total de la douille 58, car il est plus élevé que l'effort exercé par la le ressort 67 sur la clé 60.

En revanche, si le conducteur relâche prématurément son effort sur la tige 38, la douille 58 est bloquée par la clé 60 dans une position axiale avant extrême dans laquelle une portée annulaire 74 d'extrémité avant de la douille bloque le palpeur 52 indépendamment du plongeur et de la tige de commande, ce qui permet de maintenir un effort de freinage maximal tant que le retour de la tige 38 de commande n'a pas provoqué la réouverture du clapet à trois voies 50, et ainsi, le retour du piston 22 d'avant en arrière.

Dans cette conception, la clé 60 présente toutefois l'inconvénient de n'être pas à même d'effectuer un blocage de la douille 58 suivant une position axiale précise.

En effet, le coincement de la douille 58 par la clé 60 résulte d'un contact quasi ponctuel entre un bord de la lumière 61 de la clé 60 et la périphérie de la douille 58.

D'une part, la survenue de ce contact dépend de la façon dont la clé 60 bascule sur la périphérie de la douille 58. Le basculement de clé 60 étant provoqué par son entraînement par le piston 22, la vitesse de déplacement du piston 22 est déterminante, du fait de l'inertie des éléments mis en jeu, pour la localisation de la position du point de contact de la clé 60 sur la périphérie de la douille 58, qui peut varier de quelques dixièmes de millimètre.

D'autre part ce contact étant quasi-ponctuel et donc très réduit, lorsque l'effort de sollicitation de la tige 38 est relâché, la douille est susceptible de glisser partiellement sous le bord de la lumière 61 de la clé 60, sous l'influence de diverses causes telles que des vibrations ou une série d'efforts alternés du conducteur sur la tige de commande 38.

Pour remédier à cet inconvénient, l'invention propose un servomoteur du type décrit précédemment, qui garantit un positionnement précis de la clé 60 le long de la périphérie de la douille 58.

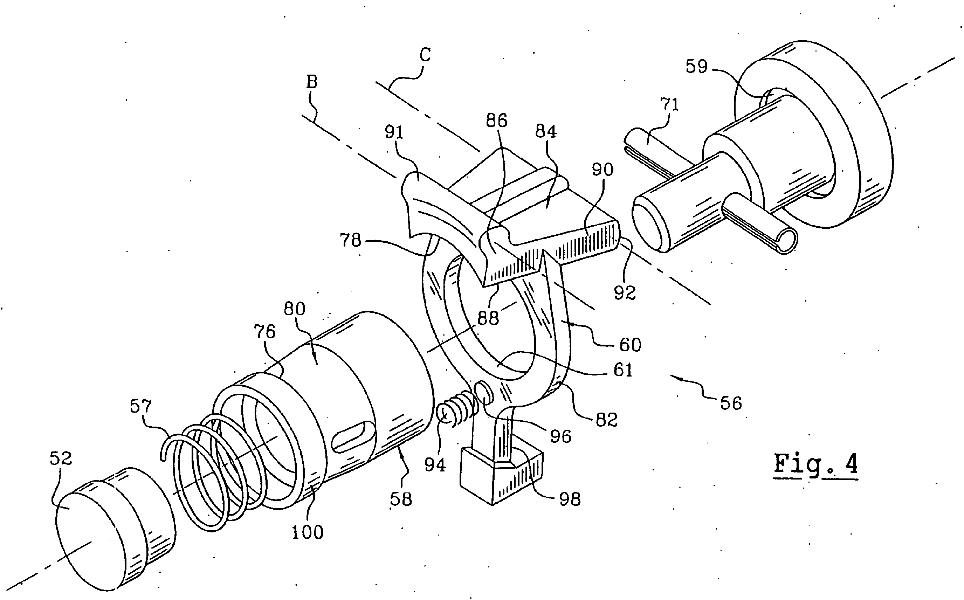

Dans ce but, conformément à l'invention et comme l'illustrent les figures 4 et suivantes, l'embrayage unidirectionnel 56 comporte au moins un face transversale 76 de blocage de la douille 58, qui est tournée axialement vers l'arrière pour former une butée pour un ergot 78 de la clé 60 s'étendant radialement vers la douille 58 , de manière à indexer axialement la position de blocage extrême de la douille 58.

A cet effet, la périphérie de la douille 58 est cylindrique, d'un diamètre sensiblement constant, et elle comporte une gorge 80 radiale dont une face transversale d'épaulement, agencée à l'avant de la douille 58 et tournée vers l'arrière, forme la face transversale 76 de blocage.

Cette disposition n'est pas limitative de l'invention. Dans le mode de réalisation préféré de l'invention, la face transversale 76 de blocage est annulaire, mais elle pourrait consister en une portion ou secteur angulaire d'élément annulaire, ou bien en une collerette faisant saillie à partir d'un corps cylindrique de la douille 58, sans modifier les propriétés et avantages de l'invention.

Avantageusement, comme l'illustrent les figures 4, 6, et 7, la gorge 80 est d'un profil sensiblement tronconique en arrière de la face transversale avant 76 d'épaulement. De la sorte, l'extrémité de la gorge 80 qui est opposée à la face transversale avant 76 d'épaulement rejoint progressivement la périphérie cylindrique de la portée arrière de la douille 58.

Le profil tronconique de la gorge 80 de la douille 58 est particulièrement avantageux car il permet, lors du basculement de la clé 60, de guider l'ergot 78 de la clé, qui présente la forme d'un secteur angulaire tronconique concave complémentaire du profil tronconique de la gorge 80, jusqu'à sa position de butée contre la face avant d'épaulement 76 de la douille 58. La douille 58 comporte une portée cylindrique 100 en avant de la gorge 80, dont la fonction sera décrite ultérieurement.

La clé 60 comporte, d'une façon analogue à la clé précédemment décrite en référence à la figure 1, une lumière circulaire 61 qui entoure la douille 58. En revanche, à la différence de la clé 60 précédemment décrite en référence à la figure 1, le bord de cette lumière 61 ne participe pas au blocage de la douille 58.

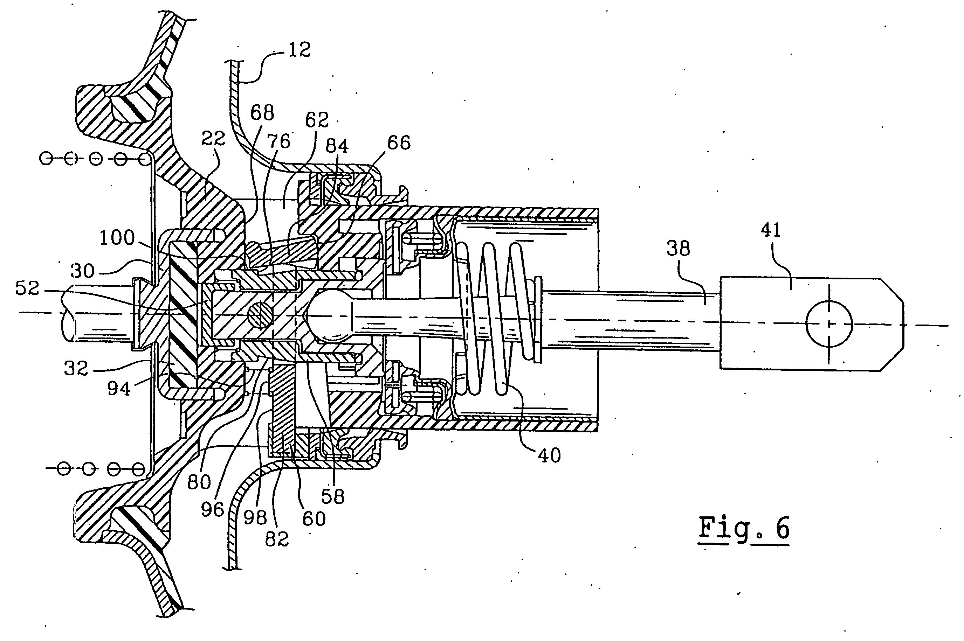

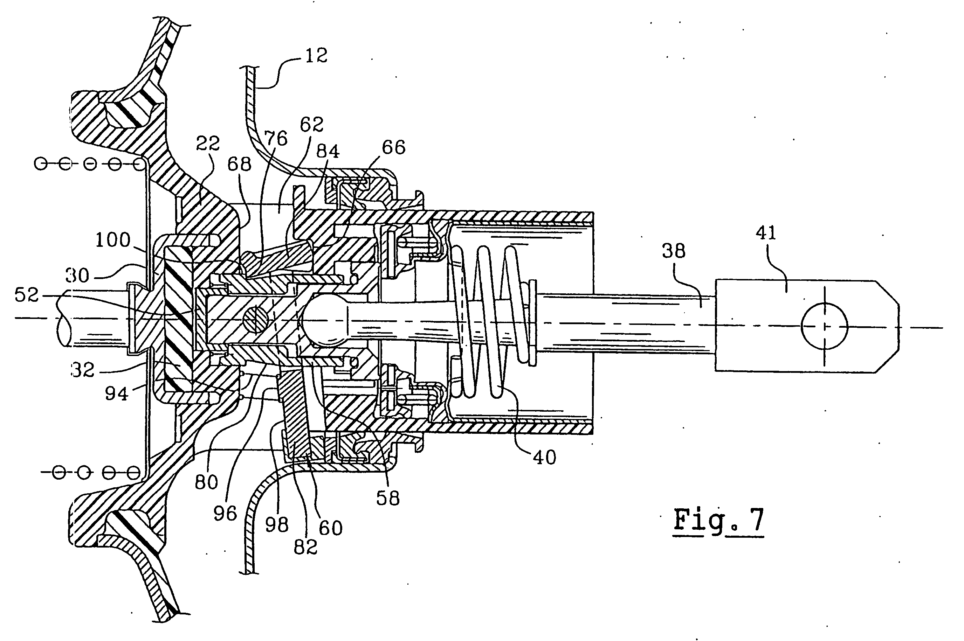

En effet, comme l'illustrent plus particulièrement les figures 6 et 7, la clé 60 présente, en section par un plan axial, la forme générale d'un "T" dont la branche verticale 82 d'orientation sensiblement radiale comporte la lumière 61 qui est traversée par la douille 58. La clé 60 en "T" comporte une branche horizontale 84, qui est d'orientation sensiblement axiale perpendiculaire à la branche principale 82, et qui est reçue sans jeu axial entre les parois avant 68 et arrière 66 de l'évidement 62 qui traverse le piston 22 perpendiculairement par rapport à son axe "A".

Cette configuration présente l'avantage de permettre seulement un mouvement de basculement de la clé 60 dans l'évidement 62. En effet, la clé 60 n'est pas susceptible de se déplacer axialement par rapport à l'évidement 62, mais peut voir sa branche 82 basculer dans l'évidement 62, conformément à la figure 7.

L'ergot 78 est porté par la branche horizontale 82 de la clé 60 en "T". Plus particulièrement, la demi-branche 86 horizontale avant de la clé en T comporte une face 88 tournée radialement vers la douille à partir de laquelle l'ergot fait saillie.

Par ailleurs, l'extrémité avant de la demi-branche 86 avant de la clé 60 en "T" est conformée en arc 91 de cylindre convexe orienté selon un axe "B" qui est orthogonal à l'axe "A" du piston 22 pour coopérer en appui avec la paroi transversale avant 68 de l'évidement. Cet arc 91 de cylindre permet notamment à la demi-branche 86 de glisser aisément le long de la paroi transversale avant 68 de l'évidement 62.

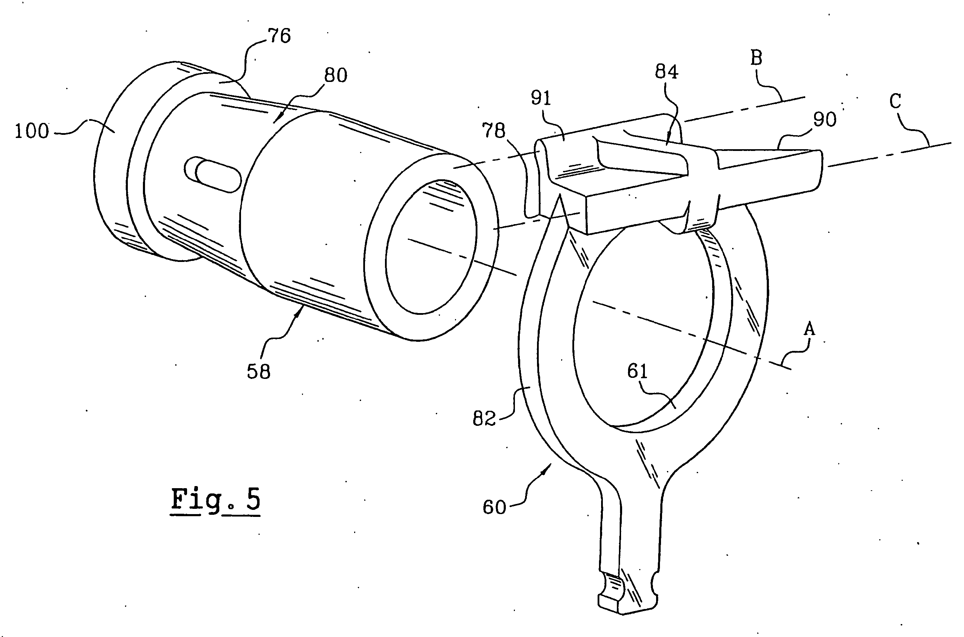

D'une façon analogue, l'extrémité arrière de la demi-branche arrière 90 de la clé en T est conformée en arc 92 de cylindre convexe orienté selon un axe "C" orthogonal à l'axe "A" du piston 22 pour glisser le long de la paroi transversale arrière 66 de l'évidement 62. Cet arc 92 de cylindre permet notamment à la demi-branche 90 de glisser aisément sur la paroi transversale arrière 66 de l'évidement 62 lors du basculement de la clé 60. Cette configuration est notamment représentée à la figure 5.

Comme l'illustrent les figures 6 et 7, la clé 60 est montée d'une façon sensiblement analogue à la clé 60 précédemment décrite, dans l'évidement 62, à cette différence que la clé 60 en "T" selon l'invention est rappelée élastiquement à l'encontre de la paroi transversale 66 de l'évidement par un ressort de compression 94 qui est agencé entre la paroi transversale avant 68 de l'évidement 62 et un pion 96 de centrage de la clé 60 en T qui fait saillie à partir d'une partie inférieure 98 opposée à l'ergot 78, de la branche verticale 82 du "T".

De la sorte, en l'absence d'effort sur la tige 38 de commande, la clé 60 occupe la position qui est représentée à la figure 6. Sa branche horizontale 84 est sensiblement parallèle à l'axe A du piston 22, et sa branche verticale 82 est sensiblement perpendiculaire à cet axe A.

Lorsque le conducteur du véhicule actionne la tige de commande 38 suivant une vitesse relativement lente, ce qui correspond à un cas de freinage progressif, le piston mobile 22 se déplace sensiblement à la même vitesse que le plongeur 46, car l'établissement de la pression atmosphérique "Pₐ " s'effectue au fur et à mesure que le clapet 50 à trois voies s'ouvre. Dans cette configuration, la branche horizontale 84 étant maintenue entre les parois avant 68 et arrière 66 de l'évidement sans possibilité de déplacement axial, la clé 60 bascule dès que la branche verticale 82 de la clé quitte son appui inférieur sur le support 72 solidaire de l'enveloppe 12. L'ergot 68 vient alors au contact de la douille 58 sur la portée cylindrique 100 qui est agencée en avant de la gorge 80, mais ne pénètre pas dans la gorge 80 tronconique.

De la sorte, si le conducteur relâche son effort, la clé 60 ne bloque pas la douille 58 et ne s'oppose pas au retour d'avant en arrière du piston mobile 22.

En revanche, si le conducteur actionne violemment la tige 38 de commande, ce qui correspond à un cas de freinage d'urgence, le plongeur 46 avance plus vite que ne peut le faire le piston mobile 22, du fait du retard lié à l'équilibrage de la pression dans la chambre arrière 18. De ce fait, lors du basculement de la clé 60, l'ergot 78 vient se loger dans la gorge 80 et glisse en butée jusqu'à la face 76 d'épaulement.

Puis, si le conducteur relâche partiellement son effort, la clé 60 bloque la douille 58 dont la portée annulaire 74 d'extrémité bloque le palpeur 52 et s'oppose ainsi au retour du piston mobile 22 d'avant en arrière, indépendamment de la position du plongeur 46. Cette position permet de maintenir un effort de freinage maximal sur le piston 22.

Lorsque le conducteur relâche son effort de façon importante, le mouvement en retour de la tige 38 actionne la le plongeur 46 dont la goupille 71 sollicite d'avant en arrière la branche verticale 82 de la clé 60, ce qui provoque le déverrouillage de la clé 60. De plus, le retour du plongeur 46 provoque l'ouverture du clapet à trois voies 50. Le rétablissement d'une dépression dans la chambre arrière 16 provoque le déplacement du piston 22 et, de ce fait provoque le retour de la clé 60 à sa position de repos, puisque sa branche horizontale 84 est guidée entre les parois avant 68 et arrière 66 du piston 22.

L'invention permet donc avantageusement de bénéficier d'un effort de freinage maximal dans des situations de freinage d'urgence, quel que soit le comportement du conducteur après un freinage violent.

## Revendications

1. Servomoteur (10) pneumatique d'assistance au freinage pour un véhicule automobile, du type qui comporte une enveloppe (12) rigide à l'intérieur de laquelle est mobile une cloison (14) transversale délimitant de façon étanche une chambre avant (16), soumise à une première pression (P₁) de dépression moteur, et une chambre arrière (18) soumise à une deuxième pression (P₂) variant entre la dépression moteur et la pression atmosphérique (Pₐ), du type qui comporte un piston mobile (22) solidaire de la cloison mobile (14) se déplaçant avec la cloison mobile (14) et une tige (38) de commande se déplaçant dans le piston (22) sélectivement en fonction d'un effort axial d'entrée exercé vers l'avant à l'encontre d'un effort de rappel exercé sur la tige (38) par un ressort de rappel (40), du type dans lequel la tige (38) est mobile suivant une position d'actionnement intermédiaire ou une position d'actionnement extrême obtenue lorsque l'effort d'entrée est appliqué à une vitesse élevée déterminée, du type qui comporte un plongeur (46) qui est agencé à l'avant de la tige (38) de commande dans le piston (22) et un clapet à trois voies (50) qui comporte au moins un siège annulaire (48) arrière du plongeur (46) et qui est susceptible de faire varier la deuxième pression (P₂) régnant dans la chambre arrière (18), notamment en mettant en communication la chambre avant (16) et la chambre arrière (18) lorsque la tige (38) de commande est en position de repos ou en mettant progressivement la chambre arrière (18) en communication avec la pression atmosphérique (Pₐ) lorsque la tige (38) de commande est actionnée, du type dans lequel, dans la position extrême d'actionnement de la tige (38) de commande, un palpeur (52) monté coulissant à l'extrémité avant du plongeur (46) est sollicité par le plongeur (46) au contact d'un disque (32) de réaction solidaire du piston (22) mobile pour transmettre au plongeur (46) et à la tige (38) de commande l'effort de réaction du piston mobile (22), et du type qui comporte un dispositif (56) d'embrayage unidirectionnel qui comporte une douille (58) coaxiale qui coulisse sur le plongeur (46), et une clé (60) sensiblement annulaire qui entoure avec jeu la douille (58) et qui est susceptible, lorsque l'effort d'entrée est appliqué à la vitesse déterminée, d'être entraînée par le piston (22) mobile pour basculer autour d'un axe globalement transversal pour coopérer avec la périphérie de la douille (58) et pour la bloquer dans une position axiale avant extrême dans laquelle une portée annulaire (74) d'extrémité avant de la douille bloque le palpeur (52) indépendamment du plongeur (46) et de la tige de commande (38),
**caractérisé en ce que** l'embrayage (56) unidirectionnel comporte au moins un face transversale (76) de blocage de la douille, qui est tournée axialement vers l'arrière pour former une butée pour un ergot (78) de la clé (60) s'étendant radialement vers la douille (58), de manière à indexer axialement la position de blocage extrême de la douille (58).

2. Servomoteur (10) pneumatique selon la revendication précédente, **caractérisé en ce que** la périphérie de la douille (58) est cylindrique, d'un diamètre sensiblement constant, et comporte une gorge radiale (80) dont une face transversale avant d'épaulement forme la face transversale (76) de blocage.

3. Servomoteur (10) selon la revendication précédente, **caractérisé en ce que** la gorge (80) est d'un profil sensiblement tronconique en arrière de la face transversale (76) avant d'épaulement.

4. Servomoteur (10) selon la revendication précédente, **caractérisé en ce que** l'ergot (78) présente la forme d'un secteur angulaire tronconique concave qui est complémentaire du profil tronconique de la gorge (80) de la douille (58).

5. Servomoteur (10) selon l'une des revendications précédentes, **caractérisé en ce que** la clé (60) présente, en section par un plan axial, la forme d'un "T" dont la branche verticale (82) d'orientation sensiblement radiale est traversée par la douille (58) et dont la branche horizontale (84), d'orientation sensiblement axiale est reçue sans jeu axial entre deux parois opposées (66, 68) d'un évidement (62) qui traverse le piston (22) perpendiculairement par rapport à son axe (A) pour ne permettre qu'un basculement de la clé (60) dans l'évidement (62).

6. Servomoteur (10) selon la revendication précédente, **caractérisé en ce que** la demi-branche horizontale avant (86) de la clé (60) en T comporte une face (88) tournée radialement vers la douille (58) à partir de laquelle l'ergot (78) fait saillie.

7. Servomoteur (10) selon l'une des revendications 5 ou 6, **caractérisé en ce que** l'extrémité avant de la demi-branche avant (86) de la clé en T est conformée en arc de cylindre (91) convexe orienté selon un axe (B) orthogonal à l'axe (A) du piston (22) pour coopérer en appui avec une paroi transversale avant (68) de l'évidement (62).

8. Servomoteur (10) selon l'une des revendications 5 à 7, **caractérisé en ce que** l'extrémité arrière de la demi-branche arrière (90) de la clé en T est conformée en arc de cylindre (92) convexe orienté selon un axe (C) orthogonal à l'axe (A) du piston pour coopérer avec une paroi (66) transversale arrière de l'évidement (62).

9. Servomoteur (10) selon la revendication précédente, **caractérisé en que** la clé (60) en T est rappelée élastiquement à l'encontre de la paroi transversale arrière (66) de l'évidement (62) par un ressort de compression (94) agencé entre la paroi transversale avant (68) de l'évidement (62) et un pion (96) de centrage de la clé (60) en T qui fait saillie à partir d'une partie (98) de la branche verticale (82) du T qui est opposée radialement à l'ergot (78).

## Claims

1. Pneumatic servomotor (10) for an assisted braking of a motor vehicle, of the type comprising a rigid casing (12), in which a transverse partition wall (14) is movable, thus defining in an airtight manner a front chamber (16) under a first engine negative pressure (P₁), and a rear chamber (18) under a second pressure (P₂), varying between the engine negative pressure and the atmospheric pressure (Pₐ) ; of the type including a moving piston (22), integral with the moving partition wall (14) and travelling with the latter, and a control rod (38), moving inside the piston (22), in a selective manner as a function of an axial input force, exerted in the forward direction against a return force applied to the rod (38) by a return spring (40) ; of the type according to which the control rod (38) is biased towards either an intermediate actuation position or an end actuation position, resulting from the applying of the input force at a determined high speed ; of the type comprising a plunger (46), arranged at the front part of the control rod (38) inside the piston (22), and a three-way valve (50), including at least an annular seat (48) borne by a rear section of the plunger (46), and capable of varying the second pressure (P₂), prevailing within the rear chamber (18), particularly by connecting the front chamber (16) with the rear chamber (18) when the control rod (38) is in the rest position, or by gradually connecting the rear chamber (18) with the atmospheric pressure (Pₐ) when the control rod (38) is actuated ; of the type in which, in the end actuation position of the control rod (38), a finger (52), which is slidingly fitted on the front end of the plunger (46), is biased by the plunger (46) into contact with a reaction disk (32), integral with the moving piston (22), so as to transmit the reaction force of the moving piston (22) to the plunger (46) and to the control rod (38) ; and of the type comprising a unidirectional clutch device (56), which includes a coaxial sleeve (58), sliding on the plunger (46), and a substantially ring-shaped key (60), arranged with a given clearance around the sleeve (58) and capable of being driven by the moving piston (22), when the input force is applied at the determined speed, so as to rotate on a generally transverse axis in order to cooperate with the periphery of the sleeve (58) and lock it in an end front axial position, in which a front end annular bearing surface (74) of the sleeve locks the finger (52), independently of the plunger (46) and of the control rod (38),
**characterised in that** the unidirectional clutch device (56) comprises at least one locking transverse face (76) for the sleeve, said face being axially directed rearwards so as to form a stop for a peg (78), provided on the key (60) and extending radially towards the sleeve (58) for an axial indexing of the end locking position of the sleeve (58).

2. Pneumatic servomotor (10) according to the preceding claim, **characterised in that** the sleeve (58) has a cylindrical periphery, with a substantially constant diameter and **in that** it comprises a radial groove (80), a shoulder-forming front transverse face of which constitutes the locking transverse face (76).

3. Servomotor (10) according to the preceding claim, **characterised in that** the groove (80) exhibits a substantially truncated-cone-shaped profile, rearwardly of the shoulder-forming front transverse face (76).

4. Servomotor (10) according to the preceding claim, **characterised in that** the peg (78) has the shape of a concave truncated-cone-shaped angular sector, which is complementary to the truncated-cone-shaped profile of the groove (80) in the sleeve (58).

5. Servomotor (10) according to any one of the preceding claims, **characterised in that** the key (60) has, in an axial sectional view, the shape of a tee, the vertical branch (82) of which is substantially radially directed and traversed by the sleeve (58), whereas its horizontal branch (84), which is substantially axially directed, is received, without any axial clearance, between two opposite walls (66, 68) of a cavity (62) traversing the piston (22), perpendicularly to its axis (A), so as to allow but a rocking motion of the key (60) inside the cavity (62).

6. Servomotor (10) according to the preceding claim, **characterised in that** the front horizontal half-branch (86) of the tee key (60) has a face (88) which radially faces the sleeve (58) and from which the peg (78) protrudes.

7. Servomotor (10) according to claim 5 or 6, **characterised in that** the front end of the front half-branch (86) of the tee key is shaped into a convex arc (91) of a cylinder in the direction of an axis (B), orthogonal to the axis (A) of the piston (22), so as to bear against a front transverse wall (68) of the cavity (62).

8. Servomotor (10) according to any one of claims 5 to 7, **characterised in that** the rear end of the rear half-branch (90) of the tee key is shaped into a convex arc (92) of a cylinder in the direction of an axis (C), orthogonal to the axis (A) of the piston, so as to cooperate with a rear transverse wall (66) of the cavity (62).

9. Servomotor (10) according to the preceding claim, **characterised in that** the tee key (60) is resiliently biased against the rear transverse wall (66) of the cavity (62) by a compression spring (94), arranged between the front transverse wall (68) of the cavity (62) and a centering spigot (96), provided on the tee key (60) and protruding from a part (98) of the vertical branch (82) of the tee, radially on the opposite side relatively to the peg (78).

## Patentansprüche

1. Pneumatischer Servomotor (10) zur Bremsunterstützung für ein Kraftfahrzeug, vom Typ, der ein starres Gehäuse (12) aufweist, in dem eine quer verlaufende Trennwand (14) beweglich ist, die in dichter Weise eine vordere Kammer (16), die einem ersten Druck (P₁), dem Motorunterdruck, ausgesetzt ist, und eine hintere Kammer (18) abgrenzt, die einem zweiten Druck (P₂) ausgesetzt ist, welcher zwischen dem Motorunterdruck und dem atmosphärischen Druck (Pₐ) schwankt, vom Typ, der einen mit der beweglichen Trennwand (14) fest verbundenen beweglichen Kolben (22), der sich mit der beweglichen Trennwand (14) verlagert, und eine Steuerstange (38) aufweist, die sich im Kolben (22) selektiv in Abhängigkeit von einer axialen Eingangskraft verlagert, welche nach vorne entgegen einer durch eine Rückstellfeder (40) auf die Stange (38) ausgeübten Rückstellkraft ausgeübt wird, vom Typ, bei dem die Stange (38) gemäß einer Betätigungszwischenstellung oder einer Betätigungsendstellung beweglich ist, welche erreicht ist, wenn die Eingangskraft mit einer vorbestimmten hohen Geschwindigkeit aufgebracht wird, vom Typ, der einen Tauchkolben (46), der am vorderen Teil der Steuerstange (38) im Kolben (22) angeordnet ist, und ein Dreiwegeventil (50) aufweist, das mindestens einen ringförmigen, hinteren Sitz (48) des Tauchkolbens (46) umfasst und den zweiten, in der hinteren Kammer (18) herrschenden Druck (P₂) variieren kann, indem insbesondere die vordere Kammer (16) und die hintere Kammer (18) verbunden werden, wenn sich die Steuerstange (38) in der Ruhestellung befindet, oder indem die hintere Kammer (18) allmählich mit dem atmosphärischen Druck (Pₐ) verbunden wird, wenn die Steuerstange (38) betätigt wird, vom Typ, bei dem in der Betätigungsendstellung der Steuerstange (38) ein Taster (52), der am vorderen Ende des Tauchkolbens (46) gleitend angebracht ist, vom Tauchkolben (46) so beaufschlagt wird, dass er eine mit dem beweglichen Kolben (22) fest verbundene Reaktionsscheibe (32) berührt, um dem Tauchkolben (46) und der Steuerstange (38) die Reaktionskraft des beweglichen Kolbens (22) zu übertragen, und vom Typ, der eine in eine Richtung wirkende Kupplungsvorrichtung (56) aufweist, die eine koaxiale, auf dem Tauchkolben (46) gleitende Hülse (58) und einen im Wesentlichen ringförmigen Schlüssel (60) aufweist, der die Hülse (58) mit Spiel umgibt und vom beweglichen Kolben (22) mitgenommen werden kann, wenn die Eingangskraft mit der vorbestimmten Geschwindigkeit aufgebracht wird, so dass er um eine insgesamt quer verlaufende Achse kippt, um mit dem Umfang der Hülse (58) zusammenzuwirken und diese in einer axialen vorderen Endstellung zu blockieren, in der eine ringförmige, vordere Endauflagefläche (74) der Hülse den Taster (52) unabhängig vom Tauchkolben (46) und der Steuerstange (38) blockiert,
**dadurch gekennzeichnet, dass** die in eine Richtung wirkende Kupplung (56) mindestens eine quer verlaufende Fläche (76) zur Blockierung der Hülse aufweist, die axial nach hinten gerichtet ist, um einen Anschlag für eine Nase (78) des Schlüssels (60) zu bilden, die sich radial zur Hülse (58) hin erstreckt, so dass die Blockierungsendstellung der Hülse (58) axial festgelegt ist.

2. Pneumatischer Servomotor (10) nach dem vorhergehenden Anspruch, **dadurch gekennzeichnet, dass** der Umfang der Hülse (58) zylindrisch ist, einen im Wesentlichen konstanten Durchmesser besitzt und eine radiale Nut (80) aufweist, bei der eine vordere, quer verlaufende Absatzfläche die quer verlaufende Blockierungsfläche (76) bildet.

3. Servomotor (10) nach dem vorhergehenden Anspruch, **dadurch gekennzeichnet, dass** die Nut (80) hinter der vorderen, quer verlaufenden Absatzfläche (76) ein im Wesentlichen kegelstumpfartiges Profil besitzt.

4. Servomotor (10) nach dem vorhergehenden Anspruch, **dadurch gekennzeichnet, dass** die Nase (78) die Form eines kegelstumpfartigen, konkaven Winkelsektors aufweist, der zum kegelstumpfartigen Profil der Nut (80) der Hülse (58) komplementär ist.

5. Servomotor (10) nach einem der vorhergehenden Ansprüche, **dadurch gekennzeichnet, dass** der Schlüssel (60) im Schnitt durch eine axiale Ebene die Form eines "T" besitzt, bei dem der senkrechte, im Wesentlichen radial ausgerichtete Schenkel (82) von der Hülse (58) durchquert ist und der waagerechte, im Wesentlichen axial ausgerichtete Schenkel (84) ohne axiales Spiel zwischen zwei gegenüberliegenden Wänden (66, 68) einer Ausnehmung (62) aufgenommen ist, die den Kolben (22) senkrecht zu dessen Achse (A) durchquert, um lediglich ein Kippen des Schlüssels (60) in der Ausnehmung (62) zu gestatten.

6. Servomotor (10) nach dem vorhergehenden Anspruch, **dadurch gekennzeichnet, dass** der waagerechte, vordere Halbschenkel (86) des T-förmigen Schlüssels (60) eine radial zur Hülse (58) hin gerichtete Fläche (88) aufweist, ausgehend von der die Nase (78) hervorsteht.

7. Servomotor (10) nach Anspruch 5 oder 6, **dadurch gekennzeichnet, dass** das vordere Ende des vorderen Halbschenkels (86) des T-förmigen Schlüssels als konvexer Zylinderbogen (91) ausgebildet ist, der gemäß einer zur Achse (A) des Kolbens (22) orthogonalen Achse (B) ausgerichtet ist, um durch Anlage mit einer vorderen quer verlaufenden Wand (68) der Ausnehmung (62) zusammenzuwirken.

8. Servomotor (10) nach einem der Ansprüche 5 bis 7, **dadurch gekennzeichnet, dass** das hintere Ende des hinteren Halbschenkels (90) des T-förmigen Schlüssels als konvexer Zylinderbogen (92) ausgebildet ist, der gemäß einer zur Achse (A) des Kolbens orthogonalen Achse (C) ausgerichtet ist, um mit einer hinteren quer verlaufenden Wand (66) der Ausnehmung (62) zusammenzuwirken.

9. Servomotor (10) nach dem vorhergehenden Anspruch, **dadurch gekennzeichnet, dass** der T-förmige Schlüssel (60) mittels einer Druckfeder (94) elastisch gegen die hintere quer verlaufende Wand (66) der Ausnehmung (62) zurückgestellt wird, wobei die Druckfeder zwischen der vorderen quer verlaufenden Wand (68) der Ausnehmung (62) und einem Stift (96) zum Zentrieren des T-förmigen Schlüssels (60) angeordnet ist, der ausgehend von einem Teil (98) des senkrechten Schenkels (82) des T hervorsteht, der der Nase (78) radial entgegengesetzt ist.
